# EUROPEAN PATENT APPLICATION

(11) **EP 3 056 073 A1**
(43) Date of publication of application: **17.08.2016**
(21) Application number: 16155598.2
(22) Date of filing: 12.02.2016
(51) Int. Cl.: A01C 9/02

(54) **PLANTER**

(30) Priority: 13.02.2015 GB 201502428
(71) Applicant: Standard Engineering Limited, Ely, Cambridgeshire CB7 4BP (GB)
(72) Inventor: Holmes, Richard, Ely, Cambridgeshire CB7 4QG (GB); Sykes, Robert, Downham Market, Norfolk PE38 0NS (GB)
(74) Representative: Boult Wade Tennant

(57) **Abstract**

The present disclosure relates to a planter (10) which is particularly suitable for planting seed potatoes (13). The planter (10) comprises a furrow opener (14), a furrow coverer, a hopper (18) and a terminal conveyor (20) having a support section (34) arranged to transport seeds between receipt and release locations (32, 33). A feed arrangement (19) directs seeds from the hopper (18) to the receipt location (32). A release device (37) is positioned proximate to the release location (33) and selectively holds a seed (13) on the terminal conveyor (20) and subsequently releases the seed (13) such that the seed (13) drops from the terminal conveyor (20) into the furrow. The support section (34) extends downwardly from the receipt location (32) such that, in use, the release location (33) is closer to the terrain than the receipt location (32). The terminal conveyor (20) comprises a continuous moveable belt (40) and at least part of the continuous moveable belt (40) forms the support section (34). Part of the continuous moveable belt (40), forming at least a portion of the support section (34), comprises a U-shaped cross-section for receiving the seeds (13).

## Description

The present disclosure is directed to a planter, especially one for seed potatoes.

A planter, especially one for seed potatoes, typically comprises a furrow opener for digging a furrow (i.e. a channel in the terrain) beneath the planter as it travels in a work direction. The furrow opener is preferably narrow to reduce the amount of earth that needs to be moved, thereby allowing an increased work speed. A seed delivery arrangement sequentially delivers seed potatoes into the furrow, preferably with suitable and equal separation between the seeds in order to improve the cultivation of the crop. After seed delivery, a covering element covers the seed potatoes and furrow with earth. A planter, especially one for seed potatoes, typically comprises a plurality of sets of such furrow openers, seed delivery arrangements and covering elements so that more than one line of seed potatoes can be planted on each movement of the planter.

The planter's seed delivery arrangement may be, for example, a "cup-type" arrangement as described in GB-A-1202018. In such an arrangement a plurality of cups are attached to a vertical, continuous, rotating belt. The vertical belt extends vertically upwardly from adjacent to the terrain to adjacent to a store of seed potatoes. In operation, each cup collects a seed potato, moves down the belt and drops the potato into the furrow. A benefit of such an arrangement is that the seed potatoes may be released close to the terrain, thereby ensuring a more controlled and even spacing. However, the size of the seed potatoes that the planter can deliver is restricted by the size of the cups.

An alternative seed delivery arrangement is the "belt type", in which a series of continuous belts (without spacing cups) direct the seed potatoes from a store to a final horizontal belt. The final belt comprises a plurality of bands with a round cross-section and is oriented horizontally relative to the ground. The bands convey the seed potatoes towards the front of the machine where a sponge roller is used to control the seed potatoes as they are dropped into the furrow. The use of the bands enables a wide range of sizes of seed potatoes to be delivered. However, the bands result in a wide belt which must be positioned above the narrower furrow opener. Hence the seed potatoes are dropped from a substantial height and the seed spacing is relatively uncontrolled and uneven.

The present disclosure therefore provides a planter comprising: a furrow opener and a furrow coverer arranged to open and close a furrow in a terrain when the planter travels in a work direction along the terrain; a hopper for seeds; a terminal conveyor having a support section arranged to transport seeds between receipt and release locations; a feed arrangement arranged to direct seeds from the hopper to the receipt location; and a release device positioned proximate to the release location and being arranged to selectively hold a seed on the terminal conveyor and subsequently release the seed such that the seed drops from the terminal conveyor into the furrow, wherein the support section of the terminal conveyor extends downwardly from the receipt location such that, in use, the release location is closer to the terrain than the receipt location.

Therefore the terminal conveyor is operable to drop the seeds in a controlled manner such that they are evenly spaced. The planter may be especially suitable for planting seed potatoes.

Preferably the release location of the terminal conveyor is within the range of from 20 to 80 cm from the bottom of the opened furrow.

Further preferably the terminal conveyor, in use, is angled downwardly at an angle in the range 10° to 80° to the work direction, more preferably in the range 20° to 70° and yet more preferably in the range 30° to 60°.

Yet further preferably the receipt location is, in the work direction, forward of the release location.

Preferably the terminal conveyor and release device are independently driven by one or more driving means.

In some embodiments the terminal conveyor comprises a continuous moveable belt and at least part of the continuous moveable belt forms the support section. The lack of cups (as in a cup-type planter) means that a relatively wide range of sizes of seeds can be delivered using the planter.

Preferably part of the continuous moveable belt, forming at least a portion of the support section, comprises a U-shaped cross-section for receiving the seeds. The terminal conveyor is therefore relatively narrow and can fit in between the sides of a relatively narrow and elongate furrow opener, which will enable a higher operational speed of the planter.

Preferably the terminal conveyor comprises an adjusting arrangement for adjusting the depth of the U-shaped cross-section such that the continuous moveable belt can receive different sizes of seed potatoes.

Preferably the terminal conveyor comprises at least one guiding means for guiding the seed potatoes, preferably towards the centre line of the belt and more preferably into the U-shaped cross-section. The guiding means may comprise at least one ridge extending from support section.

In alternative embodiments the terminal conveyor comprises a plurality of parallel cylinders rotatable in opposite directions to one another and forming the support section.

Preferably the release device comprises a gripping device arranged, in use, to hold the seeds by positively forcing the seeds against the terminal conveyor. The release device preferably comprises a moveable continuous pintle belt, the pintles of the pintle belt being resiliently flexible for positively forcing the seeds against the terminal conveyor.

Further preferably the pintle belt is elongate and extends from a first end to a second end, the first end being adjacent to the release location and the second end being located towards the receipt location, such that the pintle belt is arranged to simultaneously grip a plurality of seeds to the terminal conveyor. Yet further preferably the first end is closer to the terminal conveyor than the second end.

The release device may comprise a moveable continuous sponge belt. The sponge belt may comprise a sponge, which may comprise nitrile and/or polyvinyl chloride (PVC), mounted to a belt, which may comprise PVC. The sponge may be at least approximately 2 cm thick and may be up to 5 cm thick. The sponge may be resiliently flexible for positively forcing the seeds against the terminal conveyor. The sponge may be sufficiently flexible to allow adjacent seeds of different sizes to be gripped against the terminal conveyor. As a result, the sponge can provide sufficient grip to both a smaller seed and an adjacent larger seed.

Further preferably the sponge belt is elongate and extends from a first end to a second end, the first end being adjacent to the release location and the second end being located towards the receipt location, such that the sponge belt is arranged to simultaneously grip a plurality of seeds to the terminal conveyor. Yet further preferably the first end is closer to the terminal conveyor than the second end.

Preferably the feed arrangement comprises a selectively drivable feed conveyor positioned for delivering seeds to the receipt location of the terminal conveyor. The planter preferably further comprises: a terminal conveyor sensor for detecting an amount of seeds on the terminal conveyor; and a controller connected to the terminal conveyor sensor, wherein the controller is operable to selectively drive the selectively drivable feed conveyor based upon an output from the terminal conveyor sensor. The terminal conveyor sensor is preferably arranged to detect a build-up of a threshold number of seeds upstream of the release location on the terminal conveyor.

The selectively drivable feed conveyor preferably comprises a singulating arrangement configured to manipulate the orientation of a plurality of the seeds such that the selectively drivable feed conveyor is operable to selectively deliver seeds individually to the receipt location. Therefore, the selectively drivable feed conveyor can controllably deliver individual seeds to the terminal conveyor and the seeds on the terminal conveyor will be in a single line.

In some embodiments the selectively drivable feed conveyor further comprises a moveable continuous belt and the singulating arrangement comprises a series of separating elements protruding from the moveable continuous belt. In alternative embodiments the selectively drivable feed conveyor comprises: first and second adjacent moveable continuous belts arranged at an angle to one another in a "V" configuration; and at least one drive means operable to drive the first and second adjacent moveable continuous belts at different speeds. Preferably the selectively drivable feed conveyor is operable to transport seeds in the work direction.

The feed arrangement preferably further comprises a transfer conveyor positioned adjacent to a hopper outlet and arranged for selectively delivering seeds from the hopper outlet onto the selectively drivable feed conveyor. The planter preferably further comprises a transfer conveyor sensor configured to detect the delivery of a seed to the feed conveyor; drive means configured to selectively drive the transfer conveyor; and a controller in communication with the transfer conveyor sensor and drive means, wherein the controller is operable to control the transfer conveyor drive means based upon an output from the transfer conveyor sensor.

The present disclosure further provides a planter comprising: a furrow opener and a furrow coverer arranged to open and close a furrow in a terrain when the planter travels in a work direction along the terrain; a hopper for seeds; a terminal conveyor having a support section arranged to transport seeds between receipt and release locations; a feed arrangement arranged to direct seeds from the hopper to the receipt location; and a release device positioned proximate to the release location and being arranged to selectively hold a seed on the terminal conveyor and subsequently release the seed such that the seed drops from the terminal conveyor into the furrow, wherein: the support section of the terminal conveyor extends downwardly from the receipt location such that, in use, the release location is closer to the terrain than the receipt location; and the terminal conveyor is automatically controlled by a controller based upon the delivery of seed potatoes by the release device.

The aforementioned planter preferably comprises a plurality of sets of furrow openers, furrow coverers, terminal conveyors and feed arrangements.

The present disclosure further provides a vehicle comprising: a prime mover operable to drive ground engaging means for driving the vehicle along a terrain; and the aforementioned planter.

By way of example only, embodiments of a planter, especially one for seed potatoes, will now be described with reference to, and as shown in, the following drawings:
Figure 1 is a cross-sectional view of an embodiment of a planter for seed potatoes of the present disclosure;
Figure 2 is a view of an end of a feed conveyor of the planter of Figure 1;
Figure 3A is a view of an end of a terminal conveyor of the planter of Figure 1;
Figure 3B is a cross-sectional view in a plane between the ends of the terminal conveyor of Figure 3A;
Figure 4 is a schematic view of the side of a further embodiment of the seed potato planter of the present disclosure;
Figure 5 is a cross-sectional view of a terminal conveyor of the planter of Figure 4;
Figure 6 is a cross-sectional view of a further embodiment of a terminal conveyor of the planter of the present disclosure;
Figure 7 is a perspective view of an embodiment of a release device of the planter of Figure 1; and
Figure 8 is a perspective view of a further embodiment of a terminal conveyor of the planter of Figure 1.

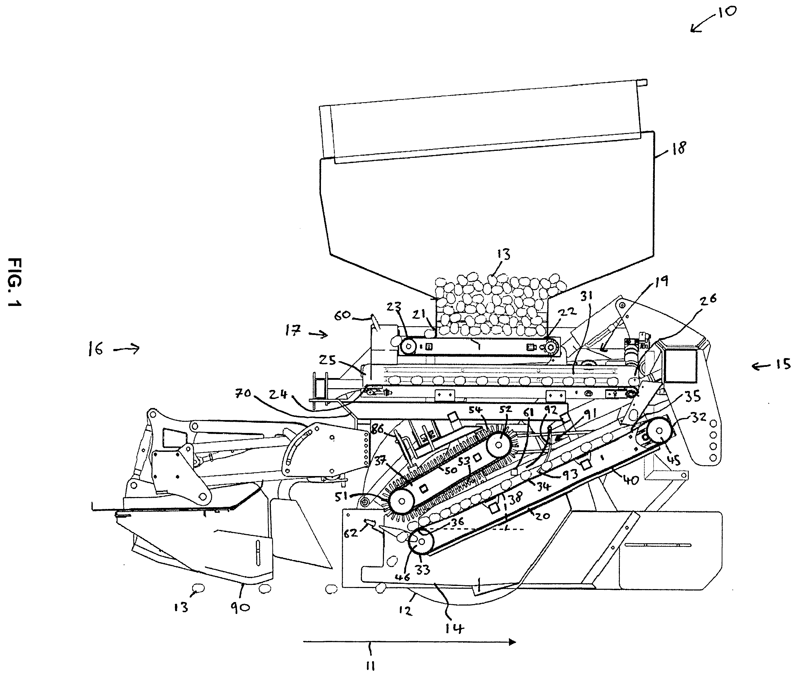

Figure 1 illustrates an embodiment of a planter 10, particularly one for seed potatoes, of the present disclosure which is arranged to be attached to and moved along a terrain by a work vehicle, such as a tractor or the like. The planter 10 is operable to travel in a work direction 11 on one or more wheels 12 and plant seed potatoes 13 (also known as tubers) in the earth during travel. A furrow opener 14 is provided towards a front side 15 (i.e. the forward side when travelling in the work direction 11) of the planter 10 and is arranged to drill/dig into the terrain to form a furrow therein. The furrow opener 14 may be elongate and extend towards the rear side 16 (i.e. the rearward side of the planter 10 when travelling in the work direction 11). A furrow coverer 90, such as a cage roller or shaping board, is arranged towards or behind the rear side 16 for covering the furrow and seed potatoes 13 therein with earth.

The planter 10 includes a seed delivery arrangement 17 which comprises a feed arrangement 19, a terminal conveyor 20 and a release device 37. The seed delivery arrangement 17 is operable to direct the seed potatoes 13 from a hopper 18 into the open furrow beneath the planter 10.

The hopper 18 is capable of storing a plurality of seed potatoes 13 and comprises an outlet 21 at its lower end. As illustrated, the hopper 18 is generally located at the top of the planter 10 above the rest of the seed delivery arrangement 17 such that gravity can assist in transporting the seed potatoes 13 to the furrow.

The feed arrangement 19 comprises a transfer conveyor 22 and a feed conveyor 24. The transfer conveyor 22 is located adjacent to and under the hopper outlet 21 and extending horizontally (i.e. substantially parallel, in use, to the terrain over which the planter 10 moves) towards the rear side 16 of the planter 10. The transfer conveyor 22 comprises a support surface which, when in use, moves towards the rear side 16 of the planter 10 in a direction opposite to the work direction 11. Thus, if the transfer conveyor 22 is in the form of a continuously rotatable belt (as illustrated) then the support surface is formed by the top portion of the belt. The transfer conveyor 22 is arranged to contact the seed potatoes 13 at the bottom of the hopper 18, draw them through the hopper outlet 21 and convey them on its support surface towards an open end 23.

The feed conveyor 24 extends substantially horizontally from a loading end 25, which is located towards the rear side 16, to an unloading end 26, which is located towards the front side 15. The feed conveyor 24 is located below the transfer conveyor 22 such that when a seed potato 13 drops from the open end 23 of the transfer conveyor 22 it drops onto the feed conveyor 24 towards its loading end 25. In particular, the loading end 25 of the feed conveyor 24 extends further towards the rear side 16 than the open end 23 of the transfer conveyor 22. The feed conveyor 24 comprises a support surface arranged to, in use, move towards the unloading end 26 such that the seed potatoes 13 received from the transfer conveyor 22 are transported towards the unloading end 26. Thus the feed conveyor 24 is operable to transport the seed potatoes 13 in the work direction 11.

The unloading end 26 is located over the terminal conveyor 20 of the seed delivery arrangement 17 such that seed potatoes 13 reaching the unloading end 26 drop onto the terminal conveyor 20. In particular, the terminal conveyor 20 extends further towards the front side 15 than the unloading end 26 of the feed conveyor 24.

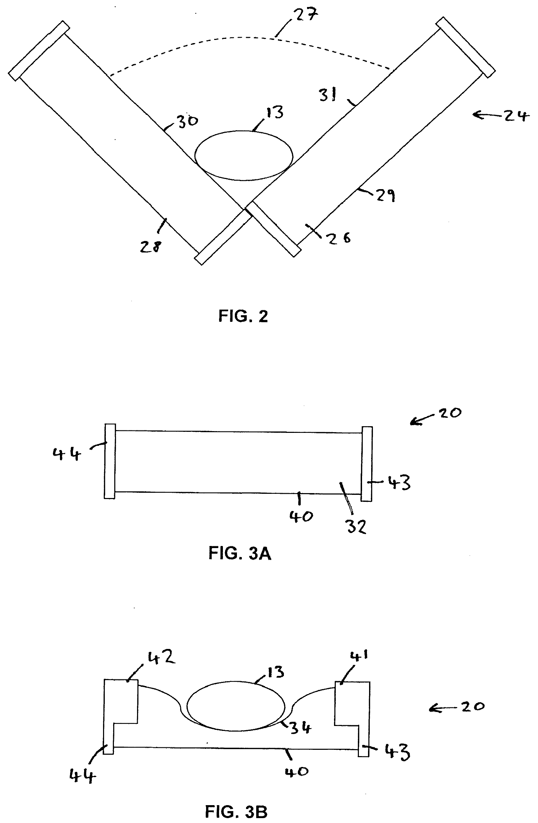

The feed conveyor 24 comprises a singulating arrangement for substantially manipulating the orientation of the seed potatoes 13 dropping onto the feed conveyor 24 such that they are separated from one another thereon into a single file configuration. As a result, the feed conveyor 24 is operable to selectively deliver seed potatoes individually to the terminal conveyor 20. Figures 1 and 2 illustrate a preferred embodiment of the feed conveyor 24 in which it comprises first and second moveable continuous belts 28, 29, each comprising a substantially planar support surface 30, 31. The first and second belts 28, 29 are positioned such that the support surfaces 30, 31 are at an angle 27 relative to one another in a "V" configuration. The angle 27 should be chosen such that a range of sizes of seed potatoes can fit in between the first and second belts 28, 29. Thus the angle 27 is preferably in the range of 50° to 130°, more preferably in the range of 70° to 110° and yet more preferably in the range of 80° to 100°. In particular, as illustrated in Figure 2, the angle may be 90°.

In operation the first and second belts 28, 29 are driven at different speeds to one another so as to tend to impart a spin to the seed potatoes 13 such that if a plurality of seed potatoes 13 are located on top of one another on the feed conveyor 24 they will be separated. In particular, the speed of the first belt 28 may be in the range of 30% to 95% of the speed of the second belt 29.

The terminal conveyor 20 extends from a receiving end 32 to a releasing end 33. The receiving end 32 is located in proximity to and underneath the unloading end 26 of the feed conveyor 24, although the receiving end 32 is located closer to the front side 15 than the unloading end 26 of the feed conveyor 24 in order to catch the falling seed potatoes 13. Furthermore, the receiving end 32 is located higher than, and in front of (i.e. closer to the front side 15 than), the furrow opener 14. The releasing end 33 is located towards the bottom of the planter 10 such that, in use, it is proximate to the opened furrow.

The terminal conveyor 20 comprises a support section 34 arranged to transport seed potatoes 13, received from the feed conveyor 24 at a receipt location 35, to a release location 36, where the release device 37 is operative. In Figure 1 the receipt location 35 is substantially adjacent to the receiving end 32 and the release location 36 is at the releasing end 33. However, the receipt and release locations 35, 36 may be further towards the middle of the terminal conveyor 20.

The support section 34 extends downwardly from the receipt location 35 to the release location 36 such that, in use, the release location 36 is closer to the terrain than the receipt location 35. The release location 36 may be, in use, within the range of from 20 to 80 cm from the bottom of the opened furrow.

Thus, the terminal conveyor 20, in use, is angled downwardly at an angle 38, as shown in Figure 1, which may be in the range 10° to 80°, more preferably in the range 20° to 70° and yet more preferably in the range 30° to 60°.

In the embodiment of Figure 1 the terminal conveyor 20 comprises a continuous moveable belt 40 and the top side of the belt 40 forms the support section 34 such that the support section 34 is a continuous support surface. As illustrated in Figures 3A and 3B, the belt 40 is substantially flat towards the receiving and releasing ends 32, 33. However, a part of the belt 40, the part forming at least portion of the support section 34, comprises a U-shaped recess arranged to receive the seed potatoes 13 having a range of sizes. The U-shape is formed in the illustrated embodiment by utilising inward protrusions 41, 42 extending from the belt sides 43, 44 and arranged to compress the sides of the flexible belt 40 in towards each other. The inward protrusions 41, 42 extend between rollers 45, 46 arranged to drive the terminal conveyor 20 and located at the receiving and releasing ends 32, 33. In an alternative embodiment, the U-shape may be formed by protrusions positioned to push the edges of the belt 40 upwards.

The seed delivery arrangement 17 further comprises a seed slowing arrangement 91 for slowing down any seed potatoes 13 which may roll down the terminal conveyor 20 under gravity, but allow seed potatoes 13 transported by the terminal conveyor 20 to pass. In particular, the seed delivery arrangement 17 may comprise at least one elongate finger 92 mounted such that a free end 93 thereof is located adjacent to the terminal conveyor 20. The at least one finger 92 is resiliently mounted, for example via a spring arrangement, such that the free end 93 is biased towards the terminal conveyor 20 to touch any seed potatoes 13 thereon.

The release device 37 is arranged to selectively hold each seed potato 13 on the terminal conveyor 20 and subsequently release the seed potato 13 in a controlled manner such that the seed potato 13 drops from the terminal conveyor 20 into the furrow opened by the furrow opener 14 and before the furrow coverer 90 closes the furrow. The release device 37 preferably comprises a gripping device such that it is arranged to hold the seed potatoes 13 in place by gripping them against the terminal conveyor 20.

In the embodiment of Figure 1 the release device 37 comprises a moveable continuous pintle belt 50 having a plurality of resiliently flexible pintles 54 (i.e. elongate pins) extending therefrom. The pintle belt 50 is elongate and extends from a first end 51 to a second end 52, the first end 51 being positioned adjacent to the release location 36 and the second end 52 being located towards the receipt location 35. The pintle belt 50 therefore comprises an elongate gripping surface 53 extending along the support section 34 which can grip a plurality of seed potatoes 13 against the terminal conveyor 20. Furthermore, the first end 51 is closer to the terminal conveyor 20 than the second end 52. Thus, in use, the seed potatoes 13 compress the pintles 54, and vice-versa, by a larger amount towards the first end 51 than at the second end 52. In particular, the first end 51 is arranged such that a single seed potato 13 can fit between the pintle belt 50 and the terminal conveyor 20. The pintle belt 50 may be resiliently biased, for example by a spring arrangement 86, to close the gap between the pintle belt 50 and terminal conveyor 20 to allow different sizes of seed potato 13 to pass through the gap. Furthermore, the pintle belt 50 may comprise a height adjusting arrangement (not shown) to allow the distance between the pintle belt 50 and terminal conveyor 20 to be set by an operator depending upon the size of the seed potatoes 13.

Each pintle 54 may have a length in the range of 2 cm to 5 cm and is preferably 3 cm. Furthermore, the gap between the ends of the pintles 54 and the terminal conveyor 20 at the release location 36 is preferably in the range of 2 cm to 20 cm in order to be compatible with a large range of seed potato 13 sizes. More preferably the gap is 3 cm.

Each of the transfer conveyor 22, feed conveyor 24, terminal conveyor 20 and release device 37 are arranged to be independently driven by one or more driving means, such as an electric or hydraulic motor. For example, power may be provided by a power unit within the planter 10 or from a power take-off of a vehicle to which the planter 10 is connected. One or more power transfer arrangements (for example hydraulic, electric and/or mechanical arrangements) are provided for directing the power to the driving means. A controller is also in communication with the driving means and power transfer arrangement(s) for controlling the power provided to the driving means.

The planter 10 further comprises a plurality of sensors 60, 61, 62 in wired or wireless communication with the controller.

A transfer conveyor sensor 60, for example in the form of a proximity sensor, is positioned adjacent to the open end 23 of the transfer conveyor 22 and detects when a threshold number of seed potatoes 13 have built up upstream of the unloading end 26 of the feed conveyor 24.. The controller is configured to only determine that seed potatoes 13 have built up on the feed conveyor 24 if the transfer conveyor sensor 60 indicates that seed potatoes 13 are present at a location on the feed conveyor 24 for a predetermined time period. Therefore, the transfer conveyor sensor 60 and controller can distinguish between a build-up of seed potatoes 13 and seed potatoes 13 being transported along the feed conveyor 24.

A terminal conveyor sensor 61 is arranged to detect the amount of seed potatoes 13 on the terminal conveyor 20 and, in particular, detect when a threshold number of seed potatoes 13 have built up upstream of the release location 36 on the support section 34. For example, the terminal conveyor sensor 61 comprises a proximity sensor or the like located partway between the releasing and receiving ends 32, 33 and adjacent to the support section 34. The controller is configured to only determine that seed potatoes 13 have built up on the terminal conveyor 20 if the terminal conveyor sensor 61 indicates that seed potatoes 13 are present at a location on the terminal conveyor 20 for a predetermined time period. Therefore, the terminal conveyor sensor 61 and controller can distinguish between a build-up of seed potatoes 13 and seed potatoes 13 moving down the terminal conveyor 20.

A release sensor 62, for example in the form of a proximity sensor, is positioned proximate to the releasing end 33 of the terminal conveyor 20 and is arranged to detect when a seed potato 13 is released from between the terminal conveyor 20 and the release device 37.

The planter 10 comprises one or more frames 70 or the like to which the seed delivery arrangement 17, furrow opener 14, furrow coverer 90, sensors 60, 61, 62, controller, power transfer arrangements, one or more wheels 12 and other planter 10 components are mounted. Furthermore, the planter 10 may comprises a plurality of sets of furrow openers 14, seed delivery arrangements 17 and furrow coverers 90. Each set is capable of creating a seed bed row and thus the planter 10 can plant a plurality of seed beds in parallel.

During operation seed potatoes 13 are drawn from the hopper 18 by the transfer conveyor 22 and dropped onto the feed conveyor 24. The feed conveyor 24 singulates the seed potatoes 13 such that they are dropped individually and in a controlled manner onto the terminal conveyor 20. The seed potatoes 13 are transported to the release device 37 by the terminal conveyor 20 which, due to the increased friction provided by the "U" shaped support section 34 and seed slowing arrangement 91, prevents the seed potatoes 13 from rolling down the terminal conveyor 20 and maintains them in a single file line. A number of seed potatoes 13 may build up between the pintle belt 40 and the support section 34. The pintle belt 40 is rotated such that it releases seed potatoes 13 individually from the "queue" of seeds into the furrow.

The controller is operable to control the driving means in order to control the delivery of seed potatoes 13 from the hopper 18 to the furrow. In use the controller controls the delivery of seed potatoes 13 by the release device 37 based upon the speed the planter 10 is moving in the work direction 11. Thus a predetermined equal spacing between seed potatoes 13 in the furrow can be achieved even if the speed of the planter 10 varies. The movement of the transfer conveyor 22, feed conveyor 24 and terminal conveyor 20 are, in general, automatically controlled by the controller based upon the delivery of seed potatoes 13 by the release device 37. The speed of the terminal conveyor 20 is based upon the rate at which seed potatoes 13 are released by the release device 37. However, the speed of feed conveyor 24 and transfer conveyor 22 may be controlled independently based upon the outputs from the terminal conveyor sensor 61 and transfer conveyor sensor 60.

The controller is operable to selectively drive the feed conveyor 24 based upon an output from the terminal conveyor sensor 61. For example, if the threshold number of seeds on the terminal conveyor 20 is reached, the controller stops the feed conveyor 24 transporting seeds 13 such that no further seed potatoes 13 are dropped onto the terminal conveyor 20. Once the number of seed potatoes 13 on the terminal conveyor 20 has fallen below the threshold then the feed conveyor 24 is restarted.

The controller is operable to control the transfer conveyor 22 based upon an output from the transfer conveyor sensor 60. In particular, if the controller determines via the transfer conveyor sensor 60 that the predetermined threshold number of seed potatoes 13 has built up on the feed conveyor 24 then the transfer conveyor 22 is stopped such that no further seed potatoes 13 are dropped onto the feed conveyor 24. Once the level of seed potatoes 13 is detected to have fallen below the predetermined threshold value then the transfer conveyor 22 is restarted.

The planter 10 therefore is capable of receiving a plurality of seed potatoes 13, singulating the seed potatoes 13 in order to controllably deliver them to the terminal conveyor 20, maintaining the seed potatoes 13 in a single line on the terminal conveyor 20 and effectively controlling the delivery of seed potatoes 13 from the terminal conveyor 20. As the terminal conveyor 20 descends downwardly towards the terrain it can drop the seed potatoes 13 sufficiently close to the terrain that they are dropped in a controlled manner and their spacing is accurate. Furthermore, by virtue of the U-shape of the belt 40, the terminal conveyor 20 is relatively narrow and as a result can fit in between the sides of a relatively narrow and elongate furrow opener 14. Thus the operational speed of the planter 10 can be increased by utilising a narrow furrow opener 14. The lack of cups (as in a cup-type planter) also means that a relatively wide range of sizes of seed potatoes 13 can be delivered using the planter 10. Furthermore, the pintle belt 50 is self-cleaning and does not become blocked with mud, as can be the case, in some circumstances, with a sponge roller.

Various alternatives of the aforementioned embodiment of the planter 10 fall with the scope of the present disclosure. The following alternatives may be incorporated singularly or in any suitable combination into the planter 10 of the present disclosure.
The feed arrangement 19 may not comprise a transfer conveyor 22 and the feed conveyor 24 may draw seed potatoes 13 directly from the hopper 18. Alternatively, one or more further conveyors may be provided between the transfer conveyor 22 and the feed conveyor 24, depending upon the sizing and/or orientation requirements of the planter 10. Furthermore, although in the preferred embodiment the conveyors 20, 22, 24 comprise continuous belts, they may instead each comprise a plurality of relatively thin bands arranged adjacent to one another and travelling around a pair of rollers arranged at either end of the conveyor.

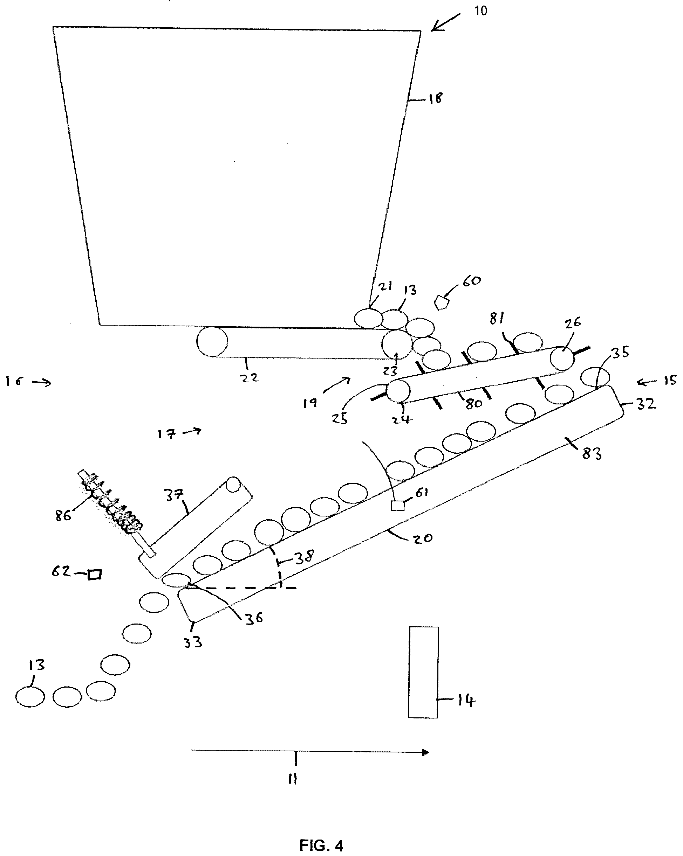

Figure 4 illustrates a further embodiment of the present disclosure illustrating yet further alternatives for the planter 10. Where appropriate, the same reference numerals have been used as in Figure 1. In this further embodiment the transfer conveyor 22 is arranged to draw seed potatoes 13 from the hopper outlet 21 towards the front side 15 of the planter 10. The feed conveyor 24 comprises a moveable continuous belt 80 and the initial singulating arrangement comprises a series of separating elements 81 protruding from the belt 80. The separating elements 81 comprise elongate walls extending from the belt 80 and separated from one another by a gap. The size of the gap is selected to ensure the separation of a plurality of seed potatoes 13 provided onto the feed conveyor 24. Although not as effective at separating seed potatoes 13 as the dual-belt arrangement of the embodiment of Figure 1, the separating elements 81 are relatively simple to produce.

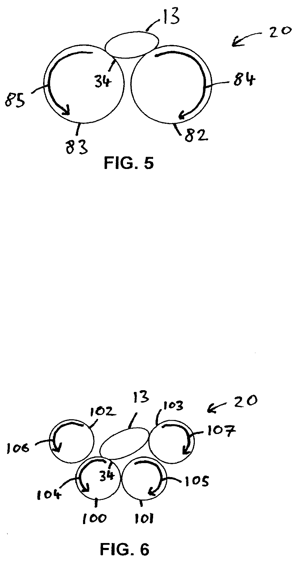

As illustrated in further detail in Figure 5, the terminal conveyor 20 comprises two cylinders 82, 83 extending substantially parallel to one another from the receiving end 32 to the releasing end 33. In use the cylinders 82, 83 are rotated in opposite directions 84, 85 to one another and form the support section 34. By rotating the cylinders 82, 83 in this manner, the seed potatoes 13 can be separated into a single file for delivery to the release device 37. Preferably the release device 37 is a pintle belt 40 as described in respect of the embodiment of Figure 1.

Figure 6 illustrates yet a further embodiment of the terminal conveyor 20 in which it comprises four cylinders 100, 101, 102, 103 extending substantially parallel to one another from the receiving end 32 to the releasing end 33. The four cylinders are arranged in a "U" shape, with a lower pair of cylinders 100, 101 arranged adjacent to one another and an upper pair of cylinders 102, 103 arranged above the lower pair of cylinders 100, 101 and separated from one another by a further distance than the lower pair of cylinders 100, 101. The separation between the upper pair of cylinders 102, 103 may be adjustable, particularly at the releasing end 33. In use the cylinders 100, 101, 102, 103 are rotated in opposite directions 104, 105, 106, 107 to one another and form the support section 34. By rotating the cylinders 100, 101, 102, 103 in this manner, the seed potatoes 13 can be separated into a single file for delivery to the release device 37.

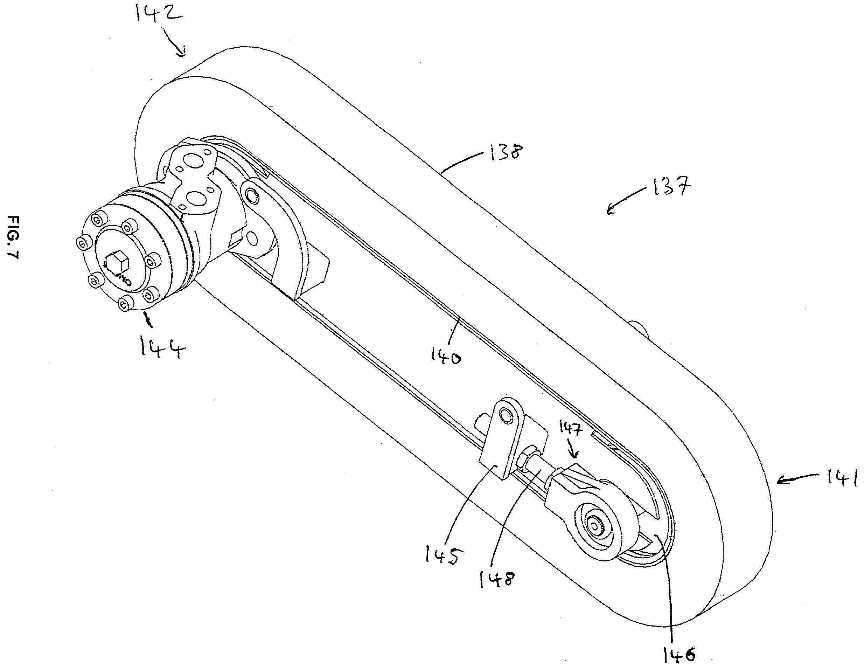

Figure 7 illustrates a further embodiment of a release device 137. The release device 137 comprises a sponge belt 138 comprising a sponge 139 mounted to a belt 140. The sponge belt 138 is mounted in the planter 10 in a similar manner to the pintle belt 50 shown in Figure 1 and all other features of the planter 10 are the same as discussed above. The sponge belt 138 is elongate and extends from a first end 141 to a second end 142, the first end 141 being positioned adjacent to the release location 36 and the second end 142 being located towards the receipt location 35. The sponge belt 138 therefore comprises an elongate gripping surface extending along the support section 34 which can grip a plurality of seed potatoes 13 against the terminal conveyor 20. Furthermore, the first end 141 is closer to the terminal conveyor 20 than the second end 142. Thus, in use, the seed potatoes 13 compress the sponge 139, and vice-versa, by a larger amount towards the first end 141 than at the second end 142. In particular, the first end 141 is arranged such that a single seed potato 13 can fit between the sponge belt 138 and the terminal conveyor 20. The sponge belt 138 may be resiliently biased, for example by a spring arrangement 86, to close the gap between the sponge belt 138 and terminal conveyor 20 to allow different sizes of seed potato 13 to pass through the gap. Furthermore, the sponge belt 138 may comprise a height adjusting arrangement (not shown) to allow the distance between the sponge belt 138 and terminal conveyor 20 to be set by an operator depending upon the size of the seed potatoes 13.

The sponge 139 may comprise nitrile and/or polyvinyl chloride (PVC) and the belt 140 may comprise PVC. The sponge 139 may be at least approximately 2 cm thick (i.e. the distance the sponge 139 extends perpendicular to the belt 140) and may be up to 5 cm thick. The sponge 139 may be resiliently flexible for positively forcing the seeds against the terminal conveyor 20. The sponge 139 may be sufficiently flexible to allow adjacent seeds 13 of different sizes to be gripped against the terminal conveyor 20. As a result, the sponge 139 can provide sufficient grip to both a smaller seed 13 and an adjacent larger seed 13. If sufficient grip is not provided then an upstream smaller seed 13 would roll towards an adjacent downstream larger seed 13 down the terminal conveyor 20 and they would not be ejected from the planter 10 in an accurately spaced manner.

The release device 137 is driven by release device driving means 144, which may comprise a motor driving a drive wheel at an end of the belt 140 as shown in Figure 7. The release device 137 may further comprise tensioning means 145 for tensioning the sponge belt 138. The tensioning means 145 may comprise a belt wheel 146 attached to resilient bias means 147 for biasing the belt wheel 146 to tension the belt 140. The resilient bias means 147 may comprise a spring 148 or the like.

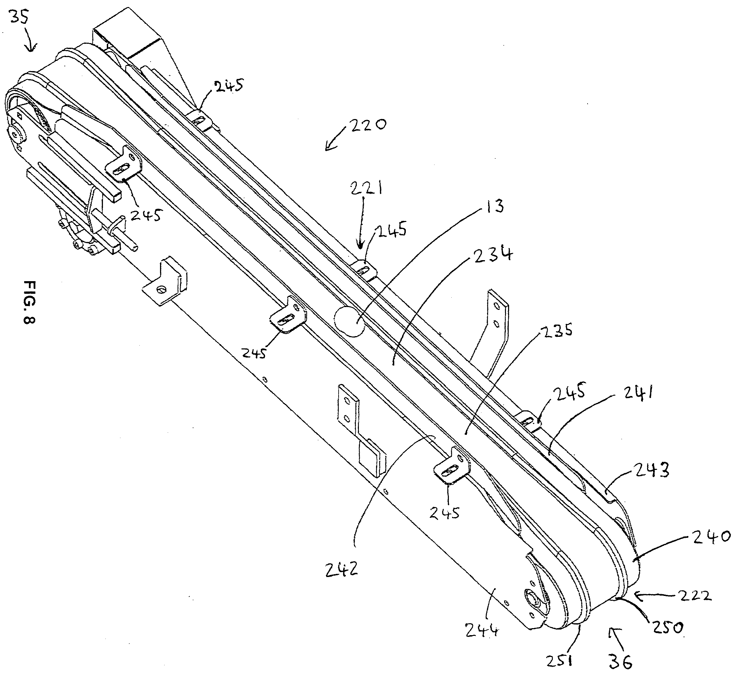

Figure 8 illustrates a further embodiment of a terminal conveyor 220, similar to that of Figure 3B, which comprises an adjusting arrangement 221 for adjusting the depth of the U-shaped recess such that it can receive different sizes of seed potatoes 13. The terminal conveyor 220 is mounted in the planter 10 in a similar manner to the terminal conveyor 20 shown in Figure 1 and all other features of the planter 10 are the same as discussed above. The terminal conveyor 220 comprises a continuous moveable belt 240 and at least part of the continuous moveable belt 240 forms a support section 234. Part of the continuous moveable belt 240, forming at least a portion of the support section 234, comprises a U-shaped cross-section 235 for receiving the seeds 13. The terminal conveyor 220 comprises first and second moveable side members 241, 242 mounted by adjustable mounts 245 to first and second belt sides 243, 244 respectively. The first and second moveable side members 241, 242, by virtue of the adjustable mounts 245, may be moveable perpendicular to the movement of the flexible belt 240 such that they can compress the belt 240 to change the depth of the U-shaped cross-section 235. Therefore, the U-shaped cross-section 235 can be adjusted to receive different sizes of seed potatoes 13. The adjustable mounts 245 may comprise slots or the like along which they can slide to move the first and second moveable side members 241, 242 relative to the first and second belt sides 243, 244.

The terminal conveyor 220 may further comprise guiding means 222 for keeping the seed potatoes 13 in the middle of the belt 240 and within the U-shaped cross-section 235. The guiding means 222 may comprise at least one ridge, in this case a first and a second ridge 250, 251. The at least one ridge 250, 251 may extend sufficiently high above the support section 234 of the belt 240 to keep different sizes of seed potatoes 13 within the U-shaped cross-section 235. The at least one ridge 250, 251 may comprise PVC and the belt 240 may comprise PVC. The at least one ridge 250, 251 may be adhered to, bonded to, moulded with or fixed to the belt 240. In other embodiments of the present disclosure the terminal conveyor 220 may not comprise a U-shaped cross-section 235 and guiding means 222 may be located on a substantially flat belt 240 for guiding seed potatoes 13 towards the centre line of the belt 240. The centre line is parallel to the direction of movement of the belt 240 and is midway between the edges of the belt 240.

It will be appreciated that although these embodiments have been described in respect of a planter 10 for seed potatoes 13, the planter 10 may be for any other suitable type of seed.

## Claims

1. A planter (10) comprising:
a furrow opener (14) and a furrow coverer arranged to open and close a furrow in a terrain when the planter (10) travels in a work direction (11) along the terrain;
a hopper (18) for seeds (13);
a terminal conveyor (20, 220) having a support section (34) arranged to transport seeds (13) between receipt and release locations (32, 33);
a feed arrangement (19) arranged to direct seeds (13) from the hopper (18) to the receipt location (32); and
a release device (37, 137) positioned proximate to the release location (33) and being arranged to selectively hold a seed (13) on the terminal conveyor (20) and subsequently release the seed (13) such that the seed (13) drops from the terminal conveyor (20, 220) into the furrow, wherein:
the support section (34) of the terminal conveyor (20, 220) extends downwardly from the receipt location (32) such that, in use, the release location (33) is closer to the terrain than the receipt location (32);
the terminal conveyor (20, 220) comprises a continuous moveable belt (40) and at least part of the continuous moveable belt (40) forms the support section (34); and
part of the continuous moveable belt (40), forming at least a portion of the support section (34), comprises a U-shaped cross-section for receiving the seeds (13).

2. A planter (10) as claimed in claim 1 wherein the release location (33) of the terminal conveyor (20, 220) is within the range of from 20 to 80 cm from the bottom of the opened furrow.

3. A planter (10) as claimed in any one of the preceding claims wherein the receipt location (32) is, in the work direction, forward of the release location (33).

4. A planter (10) as claimed in any one of the preceding claims wherein the release device (37) comprises a gripping device arranged, in use, to hold the seeds (13) by positively forcing the seeds (13) against the terminal conveyor (19).

5. A planter (10) as claimed in claim 4 wherein the release device (137) comprises a moveable continuous pintle belt (50), the pintles (54) of the pintle belt (50) being resiliently flexible for positively forcing the seeds (13) against the terminal conveyor (20, 220) or the release device (137) comprises a sponge belt (138), the sponge belt (138) being resiliently flexible for positively forcing the seeds (13) against the terminal conveyor (20, 220).

6. A planter (10) as claimed in any one of the preceding claims wherein the feed arrangement (19) comprises a selectively drivable feed conveyor (24) positioned for delivering seeds to the receipt location of the terminal conveyor (20).

7. A planter (10) as claimed in claim 6 further comprising: a terminal conveyor sensor (61) for detecting an amount of seeds (13) on the terminal conveyor (20, 220); and a controller connected to the terminal conveyor sensor (61), wherein the controller is operable to selectively drive the selectively drivable feed conveyor (24) based upon an output from the terminal conveyor sensor (61).

8. A planter (10) as claimed in claim 7 wherein the terminal conveyor sensor (61) is arranged to detect a build-up of a threshold number of seeds (13) upstream of the release location (33) on the terminal conveyor (20, 220).

9. A planter (10) as claimed in any one of claims 6 to 8 wherein the selectively drivable feed conveyor (24) comprises a singulating arrangement configured to manipulate the orientation of a plurality of the seeds (13) such that the selectively drivable feed conveyor (24) is operable to selectively deliver seeds (13) individually to the receipt location (32).

10. A planter (10) as claimed in claim 9 wherein the selectively drivable feed conveyor (24) comprises a moveable continuous belt (80) and the singulating arrangement comprises a series of separating elements (81) protruding from the moveable continuous belt (80).

11. A planter (10) as claimed in claim 9 wherein the selectively drivable feed conveyor (24) comprises: first and second adjacent moveable continuous belts (28, 29) arranged at an angle to one another in a "V" configuration; and at least one drive means operable to drive the first and second adjacent moveable continuous belts (28, 29) at different speeds.

12. A planter (10) as claimed in any one of claims 6 to 11 wherein the feed arrangement (19) further comprises a transfer conveyor (22) positioned adjacent to a hopper outlet and arranged for selectively delivering seeds from the hopper outlet onto the selectively drivable feed conveyor.

13. A planter (10) as claimed in claim 12 further comprising: a transfer conveyor sensor (60) configured to detect the delivery of a seed (13) to the feed conveyor (24); drive means configured to selectively drive the transfer conveyor (22); and a controller in communication with the transfer conveyor sensor (60) and drive means, wherein the controller is operable to control the transfer conveyor drive means based upon an output from the transfer conveyor sensor (60).

14. A planter (10) as claimed in any one of the preceding claims comprising a plurality of sets of furrow openers (14), furrow coverers, terminal conveyors (20, 220) and feed arrangements (19).

15. A vehicle comprising: a prime mover operable to drive ground engaging means for driving the vehicle along a terrain; and a planter (10) as claimed in any one of the preceding claims.
